# EUROPÄISCHE PATENTSCHRIFT

(11) **EP 2 511 072 B1**
(45) Veröffentlichungstag und Bekanntmachung des Hinweises auf die Patenterteilung: **14.06.2017**
(21) Anmeldenummer: 12157826.4
(22) Anmeldetag: 02.03.2012
(51) Int. Cl.: B29C 57/00

(54) **Verfahren und Vorrichtung zur Herstellung einer Schellennut im Endbereich eines aus elastomerem Werkstoff bestehenden Schlauches**
Method and device for producing a clamp nut in the end section of a hose made of elastomeric material
Procédé et dispositif de fabrication d'un écrou d'étrier dans la zone d'extrémité d'un tuyau comportant une matière première élastomère

(30) Priorität: 15.04.2011 DE 102011002078; 27.10.2011 DE 102011054856
(43) Veröffentlichungstag der Anmeldung: 17.10.2012
(73) Patentinhaber: ContiTech MGW GmbH, 34346 Hannoversch-Münden (DE)
(72) Erfinder: Brill, Hartmut, 37242 Bad Sooden-Allendorf (DE)
(74) Vertreter: Finger, Karsten

(56) Entgegenhaltungen:
- DE-A1- 2 804 629
- JP-A- 62 019 414

## Beschreibung

Die Erfindung betrifft ein Verfahren zur Herstellung einer Schellennut im Endbereich eines aus elastomerem Werkstoff bestehenden Schlauches sowie eine Vorrichtung zur Durchführung des Verfahrens.

Im Automobilbau werden mit Festigkeitsträgern versehene Schläuche aus elastomerem Werkstoff z.B. als Ladeluftschläuche, Kühlwasserschläuche und ähnliches eingesetzt. Die elastomeren Schlauchrohlinge werden konfektioniert, d.h. aus mehreren Schichten aufgebaut. Der Festigkeitsträger ist üblicherweise zwischen einer aus elastomerem Werkstoff bestehenden Innenschicht und einer aus elastomerem Werkstoff bestehenden Außenschicht eingebettet. Ein derart konfektionierter Schlauchrohling wird auf einen eine vorgegebene Form aufweisenden Dorn aufgezogen und dann in einem Autoklaven unter Druck und hoher Temperatur vulkanisiert.

Die derart hergestellten Schläuche müssen bei der Montage auf z.B. Saugstutzen aufgeschoben und dort mit Schlauchschellen befestigt werden. Um eine entsprechende Schellennut zur Markierung der Schellenposition bei der Montage bzw. zur Aufnahme einer Schelle bei der Montage an einem derartigen Schlauch herzustellen, sind verschiedene Verfahren bekannt:
Eine Schellennut kann z.B. durch nachträgliches Schleifen der Nuten hergestellt werden. Es ist auch bekannt, auf dem Umfang des Schlauches im Bereich mindestens eines Endes eine umlaufende Nut einzufräsen, die der flächigen Aufnahme der Schlauchschelle dient. Dies hat den Nachteil, dass bei dieser Fertigungsart ein der Vulkanisation nachgeschalteter, zweiter Arbeitsgang erforderlich ist. Ferner wird die Schlauchoberfläche verletzt, wodurch teilweise auch das Gestrick, Gewebe bzw. Gewirke der Festigkeitsträgerschicht beschädigt werden kann.

Eine Schellennut kann z.B. durch Aufbringen eines Formteiles, welches sich bei der Vulkanisation mit dem Schlauch verbindet, hergestellt werden. Dieses Verfahren benötigt jedoch ein zusätzliches Formteil. Ferner erfordert das Aufbringen des Formteiles eine exakte Positionierung. Auch ist der Sitz der Schellennut sehr ungenau.

Eine Schellennut kann z.B. durch das Ausformen durch eine Hülse hergestellt werden, in welcher eine entsprechende Kontur eingearbeitet ist. Bei diesem Verfahren sind allerdings Rohlinge mit sehr kleinen Toleranzen erforderlich. Hieraus resultiert ein sehr hoher Anteil an Fehlfabrikaten.

Aus der DE 195 42 115 A1 ist es bekannt, die umlaufende Nut für die Schlauchschelle dadurch herzustellen, dass zwei Halbschalen aus Metall den Schlauchrohling an dieser Stelle quasi zusammenquetschen. In Abhängigkeit von dem Außendurchmesser des Schlauches wird durch die Halbschalen bei einem zu dicken Schlauchrohling zu viel Material verdrängt mit der Folge, dass in der Trennebene zwischen den Enden der beiden Halbschalen Materialstege entstehen. Diese Stege müssen wieder entfernt werden, da andernfalls eine Schlauchschelle nicht vollflächig in der für sie vorgesehenen Nut anliegen würde.

Eine Schellennut kann auch z.B. mittels Prägen von elastischen, unter Vorspannung aufgezogenen Gummiringen hergestellt werden. Ein solches Verfahren ist aus der DE 197 49 332 C1 bekannt. Hier wird die umlaufende Nut für die Schlauchschelle dadurch hergestellt, dass auf den Schlauch im Bereich eines Begrenzungsringes ein elastischer Spannring, z.B. ein Gummiring, aufbringbar ist, der endseitig an dem Begrenzungsring anliegt. Durch die Ausbildung des Spannringes aus einem elastischen Material wird der Schlauch an der entsprechenden Stelle einschnürend erfasst. Dadurch wird auf dem Schlauch beim Vulkanisieren eine Nut hergestellt, die der Aufnahme einer Schlauchschelle dienen kann. Nachteilig ist hierbei, dass das Verfahren nach der DE 197 49 332 C1 nicht robotertauglich ist, da Gummiringe große Fertigungstoleranzen aufweisen. Gummiringe ermüden ferner im Einsatz und müssen nach einigen Vulkanisationszyklen ersetzt werden. Ein weiteres Verfahren zur Herstellung einer Schellennut ist in der JP62019414 offenbart.

Der Erfindung liegt die Aufgabe zugrunde, ein Verfahren der eingangs genannten Art zu schaffen, durch das eine umlaufende Nut auf einem elastomeren Schlauch hergestellt wird, deren Position lagetreu und somit robotergeeignet ist.

Die Aufgabe wird erfindungsgemäß durch ein Verfahren nach Anspruch 1 sowie eine Vorrichtung nach Anspruch 4 bzw. 5 gelöst. Vorteilhafte Weiterbildungen sind in den jeweiligen Unteransprüchen beschrieben.

Somit betrifft die vorliegende Erfindung ein Verfahren zur Herstellung einer Schellennut im Endbereich eines Schlauches aus einem elastomeren Werkstoff, z. B. Kautschuk, bei dem der Schlauchrohling auf einen Fertigungsdorn aufgezogen wird und stirnseitig durch eine Begrenzungseinrichtung auf dem Fertigungsdorn platziert ist und wobei zur Erzeugung einer Nut für eine Schlauchschelle auf dem Schlauch der Schlauchrohling im Endbereich umlaufend eingedrückt wird. Vor der Vulkanisation wird der Endbereich mit geringem radialem Spaltabstand von einem dehn- und stauchbaren, ringförmigen Formteil umgeben, das von einer radial einwirkenden Kraft umfangsmäßig beaufschlagt und in die Schlauchoberfläche eingedrückt wird und in dieser Lage während der Vulkanisation verbleibt.

Der Erfindung liegt die Erkenntnis zugrunde, dass auf diese Weise eine umlaufende Nut auf einem elastomeren Schlauch ohne die bekannten Nachteile hergestellt werden kann. So kann der zusätzlich Arbeitsgang wie das nachträgliche Schleifen oder Fräsen der Nut verzichtet werden, woraus sich ein Kostenvorteil durch das Sparen dieses Arbeitsganges ergibt. Auch wird hierdurch eine hohe Wiederholgenauigkeit gegenüber bekannten Verfahren erreicht. Ebenso wird die Herstellung mit engen Toleranzen ermöglicht. Die Ausbildung von Materialstegen kann vermieden werden. Die Verwendung derartig hergestellter Schläuche ist somit auch für Roboter und Automatisierungsanlagen möglich, die eine hohe Lagetreue der Schellennut erfordern.

Dabei ist unter dem ringförmigen Formteil ein in Umfangsrichtung geschlossenes ringförmiges Formteil zu verstehen. Hierdurch kann erreicht werden, dass die radial einwirkende Kraft über den gesamten Umfang aufgebracht wird, d.h. dass in radialer Richtung hervortretende Stellen oder Bereiche des Schlauches wie z.B. Materialstege vermieden werden können.

Mittels dieses Verfahrens kann das Prägen von Schellennuten ebenso vorgenommen werden wie das Aufbringen bzw. Einbringen von Einbaumarkierungen, Beschriftungen, Kennzeichnungen und dergleichen in die Oberfläche eines vulkanisierten Schlauches.

Gemäß einem Aspekt des erfindungsgemäßen Verfahrens wird die radiale Umfangskraft von einem umlaufenden, sich bei Temperatur ausdehnenden Werkstoff ausgeübt, der das ringförmige Formteil auf seinem Außenumfang beaufschlagt, so dass das ringförmige Formteil bei Temperaturerhöhung in die Schlauchoberfläche eindringt und in dieser Lage während der Vulkanisation verbleibt.

Bei einer Erhöhung der Vulkanisationstemperatur dehnt sich der einen Dehnstoff darstellende Werkstoff aus. Durch die Abstützung des Außenumfangs wirkt die Volumenzunahme radial nach innen auf das ringförmige Formteil, das seinen Innendurchmesser verringert und damit die Schellennut in die Schlauchoberfläche einprägt. Der Wärmeausdehnungskoeffizient des Dehnstoffes ist größer als der Werkstoff des umgebenden Bauteiles.

Als Dehnstoff sind alle sich ausdehnenden und verformbaren Materialien, wie z.B. Öl, Wachs oder Hartparaffin, verwendbar. Durch Temperaturänderung findet bei diesen Werkstoffen ein materialabhängiger Phasenübergang statt. Dabei erfährt der Dehnstoff eine signifikante Volumenänderung.

Gemäß einem alternativen Aspekt des erfindungsgemäßen Verfahrens wird die radiale Umfangskraft von einem Medium ausgeübt, das das ringförmige Formteil auf seinem Außenumfang beaufschlagt, so dass das ringförmige Formteil bei Druckerhöhung in einer Druckkammer in die Schlauchoberfläche eindringt und in dieser Lage während der Vulkanisation verbleibt.

Vorteilhaft ist hierbei, dass der Druck auf das ringförmige Formteil durch bekannte Vorrichtung zur Druckerzeugung wie Pumpen oder Kolben etc. ausgeübt werden kann. Derartige Vorrichtungen sind bekannt und erprobt und einfach und kostengünstig vorzusehen. Beispielsweise kann ein Reservoir des Mediums, welches vorzugsweise ein flüssiges Medium (Fluid) ist, mittels einer Leitung oder eines Schlauches mit der Druckkammer verbunden sein. Wird nun z.B. mittels eines Kolbens das Volumen des Reservoirs verringert, wird das Medium über die Leitung in die Druckkammer gedrückt und übt dort mittels des ringförmigen Formteils seinerseits den nutprägenden Druck auf die Schlauchoberfläche aus. Hier ist es vorteilhaft, als Medium ein möglichst inkompressibles Medium wie z.B. Hydrauliköl oder dergleichen zu verwenden.

Die Erfindung betrifft auch eine Vorrichtung zur Durchführung des Verfahrens nach Anspruch 1, mit einem Fertigungsdorn zum Aufziehen des Schlauchrohlings, wobei auf den Fertigungsdorn endseitig eine Begrenzungseinrichtung für die Schlauchstirnseite aufsetzbar ist und wobei Mittel zur Erzeugung einer Nut für eine Schlauchschelle auf dem Schlauch vorgesehen sind.

Die Vorrichtung ist dadurch gekennzeichnet, dass die Begrenzungseinrichtung eine stirnseitig mit einem radialen Anschlag versehene Begrenzungshülse ist, die am anderen Ende eine umlaufende, mit einer Füllung aus einem sich bei Temperatur ausdehnenden Werkstoff versehene Dehnkammer aufweist, wobei die Dehnkammer an ihrem Innenumfang eine umlaufende ringförmige Öffnung aufweist, in der ein ringförmiges, dehn- und stauchbares Formteil mit Rückstellkraft eingesetzt ist.

Das ringförmige Formteil, das im Inneren des Endbereichs der stirnseitig auf den Fertigungsdorn gesteckten Hülse angeordnet ist, ist umfangsmäßig von einem Ring aus Dehnstoff umgeben, der unter Vulkanisationsbedingungen durch seine aufgrund des umgebenden Gehäuses radial nach innen gerichtete Ausdehnung das dehn- und stauchbare Formteil in die Schlauchoberfläche presst.

Nach der Vulkanisation zieht sich der Dehnstoff bei Erreichen der Normaltemperatur wieder zusammen. Da die Dehnkammer komplett mit Dehnstoff gefüllt ist, wird durch das Schrumpfen des Dehnstoffes ein Unterdruck in dem System erzeugt, welcher das ringförmige Formteil in die ursprüngliche Form versetzt. Daraus ergibt sich eine hohe Lebensdauer des ringförmigen Formteiles.

Gemäß einem alternativen Aspekt der erfindungsgemäßen Vorrichtung ist diese dadurch gekennzeichnet, dass die Begrenzungseinrichtung eine stirnseitig mit einem radialen Anschlag versehene Begrenzungshülse ist, die am anderen Ende eine mit einem Medium versehene Druckkammer aufweist, wobei die Druckkammer an ihrem Innenumfang eine umlaufende ringförmige Öffnung aufweist, in der ein dehn- und stauchbares, ringförmiges Formteil eingesetzt ist.

Mittels dieser alternativen Variante der erfindungsgemäßen Vorrichtung kann mittels des Drucks, der durch ein Medium wie z.B. Hydrauliköl ausgeübt werden kann, der nutprägende Druck mittels des ringförmigen Formteils auf die Schlauchoberfläche ausgeübt werden.

Gemäß einem Aspekt der erfindungsgemäßen Vorrichtungen besteht das ringförmige Formteil aus einem elastischen Werkstoff mit Rückstellkraft, z. B. Gummi.

Gemäß einem weiteren Aspekt der erfindungsgemäßen Vorrichtungen weist der Fertigungsdorn eine umlaufende Oberflächennut auf, die sich lagemäßig mit der ringförmigen Öffnung deckt. Dadurch ist eine umlaufende Erhebung am inneren Umfang des Schlauchendbereichs herstellbar. Ein so hergestellter Schlauch kann bei der Montage eine formschlüssige Verbindung mit dem Stutzen eingehen.

Gemäß einem weiteren Aspekt der erfindungsgemäßen Vorrichtungen weist der Fertigungsdorn umlaufende Rillen auf, die sich lagemäßig mit der ringförmigen Öffnung decken. Dadurch werden umlaufende rippenförmige Ansätze am inneren Umfang des Schlauchendbereichs herstellbar, die nach der Montage an einem Rohrstutzen wie eine Labyrinth-Dichtung wirken.

Gemäß einem weiteren Aspekt der erfindungsgemäßen Vorrichtungen kann das Medium mittels einer Druckfeder zumindest anteilsweise in die Druckkammer gedrückt werden.

Dies ist vorteilhaft, weil auf diese Weise zumindest teilweise auf Pumpen oder dergleichen, d.h. beweglich und energieverbrauchende Komponenten, verzichtet werden kann, um das Medium in die Druckkammer hinein zu befördern. Vielmehr können der Druck auf das Medium und damit der Druck des ringförmigen Formteils auf die Schlauchoberfläche durch eine Feder als mechanischer Speicher potentieller Energie erfolgen. Somit muss durch z.B. eine Pumpe oder einen Kolben lediglich der verbleibende benötigte Druck auf das Medium ausgeübt werden, wodurch diese Komponenten einfacher, kleiner und kostengünstiger ausfallen können.

Ferner ist vorteilhaft, dass der Druck des Fluids auf das ringförmige Formteil durch die Druckfeder als Kraftspeicher auch während des Vulkanisationsvorgangs im Autoklaven aufrechterhalten werden kann, ohne dass weitere Komponenten im Autoklaven vorhanden sein müssen. So kann die Druckfeder derart ausgelegt sein, dass die erforderliche Kraft zur Ausübung des Druckes auf das ringförmige Formteil alleinig durch die Druckfeder aufgebracht wird und diese so unter Vulkanisationsbedingungen alleinig durch die Druckfeder aufrechterhalten werden kann.

Gemäß einem weiteren Aspekt der erfindungsgemäßen Vorrichtungen kann das Medium mittels einer Rückstellfeder zumindest anteilsweise aus der Druckkammer heraus befördert werden.

Vorteilhaft ist hierbei, dass sich die Vorrichtung auf diese Weise zumindest teilweise selbstständig von der Kraft entlasten kann, die während der Vulkanisation zur Prägung der Schellennut erforderlich ist. Geschieht dies durch einen mechanischen Kraftspeicher, der entgegen des Druckes wirkt, der die Prägung der Schellennut bewirkt, kann zumindest teilweise auf Pumpen oder dergleichen, d.h. beweglich und energieverbrauchende Komponenten, verzichtet werden, um das Medium aus der Druckkammer heraus zu befördern. Vielmehr kann der Druck auf das ringförmige Formteil durch eine Feder als mechanischer Speicher potentieller Energie genommen werden. Somit muss durch z.B. eine Pumpe oder einen Kolben lediglich ein Teil der Arbeit verrichtet werden, der erforderlich ist, das Medium aus der Druckkammer zu entfernen, wodurch diese Komponenten einfacher, kleiner und kostengünstiger ausfallen können.

Gemäß einem weiteren Aspekt der erfindungsgemäßen Vorrichtungen kann das Medium mittels eines Kolbens in die Druckkammer gedrückt und aus der Druckkammer heraus befördert werden, wobei der Kolben mittels einer Verriegelung in einer Position verriegelt werden kann, in der der Kolben auf das Medium Druck ausübt.

Auf diese Weise kann mittels des Kolbens über das Medium Druck auf das ringförmige Formteil ausgeübt werden und dieses in dem Zustand, in dem es durch den Druck in die Schlauchoberfläche gedrückt ist, mittels der Verriegelung gehalten werden. Dann kann der Druck durch den Kolben von dem ringförmigen Schlauchteil genommen werden und es verbleibt durch die Verriegelung in dieser Position. Vorteilhaft ist hierbei, dass lediglich kurzzeitig der Druck durch den Kolben bereitgestellt werden muss und nicht durchgängig für die Dauer der Vulkanisation, wodurch Energie eingespart werden. Ferner kann die Pumpe mit dem Kolben auch vollständig nach diesem Vorgang von der Vorrichtung entfernt werden, um diese Vorrichtung dann ohne Pumpe in einen Autoklaven zur Vulkanisation zu verwenden. Auch kann durch die Verriegelung eine sehr exakte Eindrücktiefe des ringförmigen Formteils, auch über eine längere Zeit wie z.B. den Vulkanisationsvorgang, gehalten werden, da der Druck auf das ringförmige Formteil durch das Zusammenwirken von Gegendruck des Schlauchmaterials und Verriegelung konstant ist. Um diesen Druck zu halten, sind ferner keinerlei Hilfsmittel wie Messmittel und Steuerung etc. erforderlich.

Anhand der Zeichnungen werden nachstehend Ausführungsbeispiele der Erfindung näher erläutert. Es zeigt
- Fig. 1: einen Fertigungsdorn zur Aufnahme eines zu vulkanisierenden Schlauches mit einer stirnseitig aufgesetzten Begrenzungshülse nach der Vulkanisation des Schlauches gemäß einer ersten Ausführungsform;
- Fig. 2: in Detaildarstellung den offenen Endbereich der stirnseitigen Begrenzungshülse mit der den Dehnstoff aufnehmenden, an ihrem Innenumfang geöffneten Dehnkammer gemäß der ersten Ausführungsform;
- Fig. 3: das sich bei Ausdehnung des Dehnstoffes im Innendurchmesser verkleinernde ringförmige Formteil in Prägestellung gemäß der ersten Ausführungsform;
- Fig. 4: die nach der Vulkanisation hergestellte Nut in der Schlauchoberfläche gemäß der ersten Ausführungsform;
- Fig. 5: in Detaildarstellung den Schlauchendbereich nach der Vulkanisation auf einem mit einer Oberflächennut versehenen Fertigungsdorn gemäß der ersten Ausführungsform;
- Fig. 6: eine modifizierte Bodenausbildung der Oberflächennut gemäß der ersten Ausführungsform;
- Fig. 7: einen Fertigungsdorn zur Aufnahme eines zu vulkanisierenden Schlauches mit einer stirnseitig aufgesetzten Begrenzungshülse vor der Vulkanisation des Schlauches gemäß einer zweiten Ausführungsform;
- Fig. 8: in Detaildarstellung den offenen Endbereich der stirnseitigen Begrenzungshülse mit der das Medium aufnehmenden Druckkammer gemäß der zweiten Ausführungsform in Prägestellung;
- Fig. 9: in Detaildarstellung den offenen Endbereich der stirnseitigen Begrenzungshülse mit der das Medium aufnehmenden Druckkammer gemäß der zweiten Ausführungsform in gelöster Stellung;
- Fig. 10: in Detaildarstellung eine Variante des Zylinders der stirnseitigen Begrenzungshülse gemäß der zweiten Ausführungsform in gelöster Stellung;
- Fig. 11: in Detaildarstellung eine weitere Variante des Zylinders der stirnseitigen Begrenzungshülse gemäß der zweiten Ausführungsform in gelöster Stellung;
- Fig. 12: in Detaildarstellung eine weitere Variante des Zylinders der stirnseitigen Begrenzungshülse gemäß der zweiten Ausführungsform in Prägestellung.

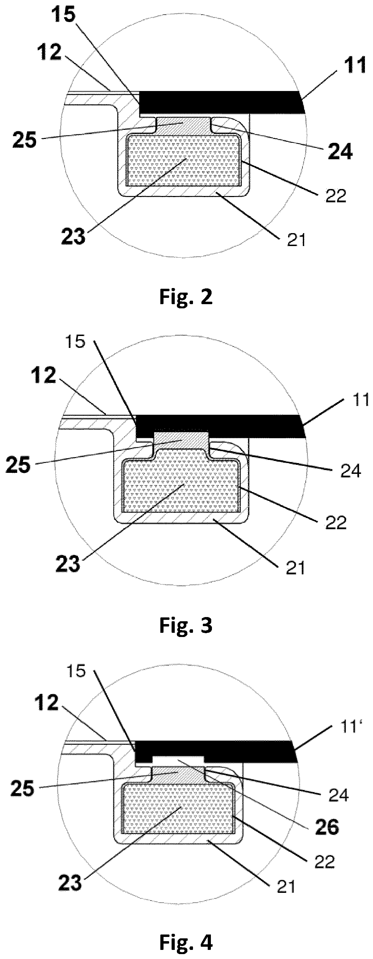

Ein Schlauchrohling 11 wird vor der Vulkanisation auf einen Fertigungsdorn 12 aufgeschoben. Der Fertigungsdorn 12 ist im vorderen Bereich 13 konisch ausgebildet, um das Aufziehen des Schlauchrohlings 11 zu erleichtern. Der Schlauchrohling 11 wird soweit auf den Fertigungsdorn 12 geschoben, dass ein axialer Abstand zu dem konischen Anfangsbereich 13 des Fertigungsdornes 12 besteht, auf den danach eine konzentrische Begrenzungshülse 14 bis zum Anschlag mit einer stirnseitigen radialen Begrenzungswand 17 aufgeschoben wird, die mit einer Innenstufe 15 an der Stirnfläche des Schlauchrohlings 11 anliegt (vgl. Fig. 2). Die Begrenzungshülse 14 wird über eine Stirnschraube 16 fest mit dem Fertigungsdorn 12 stirnseitig verbunden.

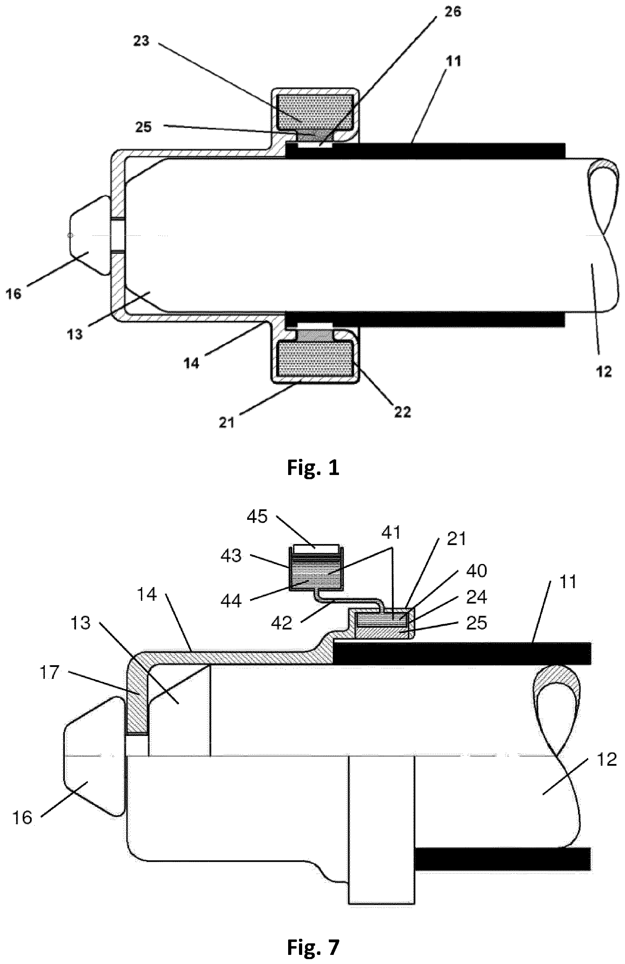

Die Begrenzungshülse 14 gemäß der ersten Ausführungsform weist an ihrem schlauchseitigen Ende umfangsmäßig eine Durchmessererweiterung in Form eines Ringflansches 21 auf, in dem eine umlaufende, nach innen offene Dehnkammer 22 vorhanden ist. In diese Dehnkammer 22 ist Wachs als Dehnstoff 23 eingefüllt. Statt mit Wachs kann die Dehnkammer 22 auch mit Hartparaffin oder Hydrauliköl gefüllt sein, wobei zur Ausübung einer Umfangskraft das Hydrauliköl durch eine externe Druckquelle beaufschlagbar sein muss (vgl. Fig. 7 ff.).

Die Dehnkammer 22 weist an ihrem inneren Umfang eine umlaufende ringförmige Öffnung 24 auf, in der ein dehn- und stauchbares, ringförmiges Formteil 25 eingesetzt ist. Der Außenumfang des Formteiles 25 liegt in direktem Kontakt mit dem Dehnstoff 23. Der konfektionierte Schlauchrohling 11 ist auf dem eine vorgegebene Form aufweisenden Fertigungsdorn 12 aufgezogen und wird dann mit der gesamten Vorrichtung in einen Autoklaven eingebracht und dort unter Druck und hoher Temperatur vulkanisiert. Während des Vulkanisationsvorganges erhöht sich die Vulkanisationstemperatur auf ca. 160 bis 180° C. Dieses führt zu einer Ausdehnung des lagegenau platzierten Dehnstoffes 23 (vgl. Fig. 3), der dadurch auf den Außenumfang des axial lagegenau platzierten ringförmigen Formteils 25 radial einwirkt und dieses in die noch unvulkanisierte Schlauchoberfläche eindrückt. Der Schlauchrohling 11 wird nun in dieser Position ausvulkanisiert.

Nach der Vulkanisation zieht sich der Dehnstoff 23 bei Erreichen der Normaltemperatur wieder zusammen, so dass das ringförmige Formteil 25 sich wieder zurückstellt, da die Dehnkammer 22 komplett mit Dehnstoff 23 gefüllt ist und durch das Schrumpfen des Dehnstoffes 23 ein Unterdruck in dem System erzeugt, welcher das ringförmige Formteil 25 in die ursprüngliche Form versetzt. Dieses wird dann unterstützt, wenn das ringförmige Formteil 25 aus einem Werkstoff mit Rückstellkraft besteht.

Beim Zurückstellen gibt das Formteil 25 eine aufgrund des unverrückbaren Abstandes zwischen der Begrenzungswand 17 der Befestigungshülse 14 und der ringförmigen Öffnung 24 der Dehnkammer 22 lagegenau in die Schlauchoberfläche eingeprägte Nut 26 frei (vgl. Fig. 4). Die Begrenzungshülse 14 wird nach Lösen der Stirnschraube 16 vom Fertigungsdorn 12 abgenommen und der vulkanisierte Schlauch 11' abgezogen. Die gebildete Nut 26 dient zur Aufnahme einer Schlauchschelle anlässlich der folgenden Montage des Schlauches 11' auf einen Schlauchstutzen.

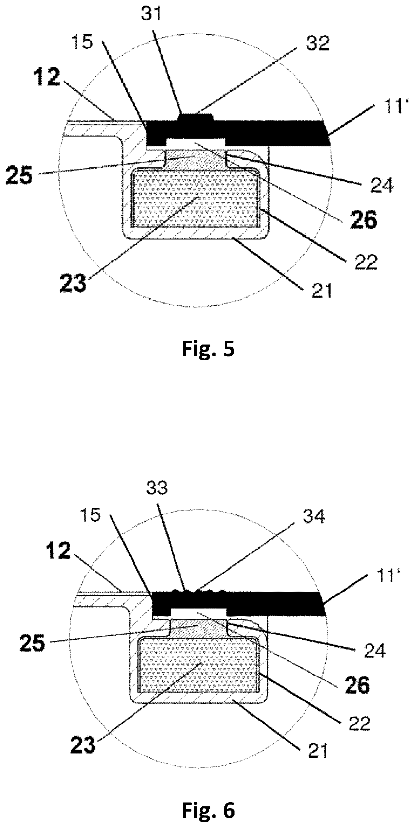

Wie in Fig. 5 dargestellt, kann der Fertigungsdorn 12 mit einer umlaufenden Oberflächennut 31 ausgestattet sein, die sich lagemäßig mit der ringförmigen Öffnung 24 deckt. Dadurch ist eine umlaufende Erhebung 32 am inneren Umfang des Schlauchendbereichs 11' herstellbar. Ein so hergestellter Schlauch 11' kann bei der Montage eine formschlüssige Verbindung mit einem gehäuseseitigen Anschlussstutzen eingehen.

Wie in Fig. 6 dargestellt, weist der Fertigungsdorn 12 umlaufende Rillen 33 auf, die sich lagemäßig mit der ringförmigen Öffnung 24 decken. Dadurch werden umlaufende rippenförmige Ansätze 34 am inneren Umfang des Schlauchendbereichs 11' herstellbar, die nach der Montage an einem Rohrstutzen wie eine Labyrinth-Dichtung wirken.

Fig. 7 zeigt einen Fertigungsdorn 12 zur Aufnahme eines zu vulkanisierenden Schlauches 11 mit einer stirnseitig aufgesetzten Begrenzungshülse 14 vor der Vulkanisation des Schlauches gemäß einer zweiten Ausführungsform. In diesem zweiten Ausführungsbeispiel erfolgt die Prägung der Nut 26 in der Schlauchoberfläche grundsätzlich wie in dem ersten Ausführungsbeispiel. Lediglich die Art und Weise, wie der Druck auf das ringförmige Formteil 25 ausgeübt wird, unterscheidet sich wie folgt.

Die Begrenzungshülse 14 gemäß der zweiten Ausführungsform weist an ihrem schlauchseitigen Ende umfangsmäßig eine Durchmessererweiterung in Form eines Ringflansches 21 auf, in dem eine umlaufende, nach innen offene Druckkammer 40 vorgesehen ist. Die Druckkammer 40 weist an ihrem inneren Umfang eine umlaufende ringförmige Öffnung 24 auf, in der ein dehn- und stauchbares, ringförmiges Formteil 25 eingesetzt ist. Der Außenumfang des Formteiles 25 steht in direktem Kontakt mit einem flüssigen Medium 41 (Fluid 41), welches in der Druckkammer 40 aufgenommen wird. Dieses flüssige Medium 41 ist vorzugsweise ein inkompressibles Fluid 41, welches gegenüber der Temperatur beim Vulkanisieren im Autoklaven beständig sein muss wie z.B. ein Hydrauliköl, Silikonöl, Bremsflüssigkeit etc. Es kann jedoch auch ein plastisches Medium 41 verwendet werden.

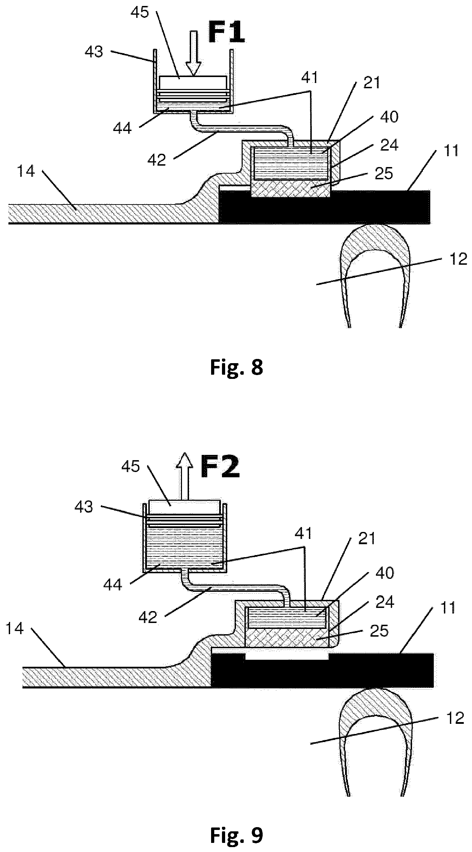

Die Druckkammer 40 ist über eine Fluidleitung 42 (Hydraulikleitung 42) mit einem Fluidreservoir 43 verbunden, das vorzugsweise durch einen Zylinder 43 gebildet wird, der einen Hohlraum 44 und einen Kolben 45 aufweist. Der Hohlraum 44 ist mit dem Fluid 41 gefüllt, welches mittels einer Kraft F1 des Kolbens 45 durch die Fluidleitung 42 in die Druckkammer 40 gedrückt werden kann, um hierdurch das ringförmige Formteil 25 durch die Öffnung 24 in die Oberfläche des Schlauchrohlings 11 hinein zu drücken (vgl. Fig. 8).

Der Hohlraum 44, die Fluidleitung 42 und die Druckkammer 40 bilden ein geschlossenes hydraulisches System. In diesem Zustand (Prägestellung) wird nun die Vorrichtung in einem Autoklaven mit Druck und Temperatur beaufschlagt und so der Schlauchrohling 11 vulkanisiert.

Nach dem Vulkanisationsvorgang wird die Vorrichtung dem Autoklaven wieder entnommen. Dann kann mittels einer Kraft F2 des Kolbens 45 das Fluid 41 über die Fluidleitung 42 aus der Druckkammer 40 wieder entzogen werden, um hierdurch das ringförmige Formteil 25 aus der Schellennut 26 des vulkanisierten Schlauches 11' in die Öffnung 24 hinein zu ziehen (vgl. Fig. 9). Hierdurch wird die geprägte Schellennut 26 von dem ringförmigen Formteil 25 freigegeben. Der fertige Schlauch 11' hat nun seine endgültige Form und kann von dem Fertigungsdorn 12 gezogen werden.

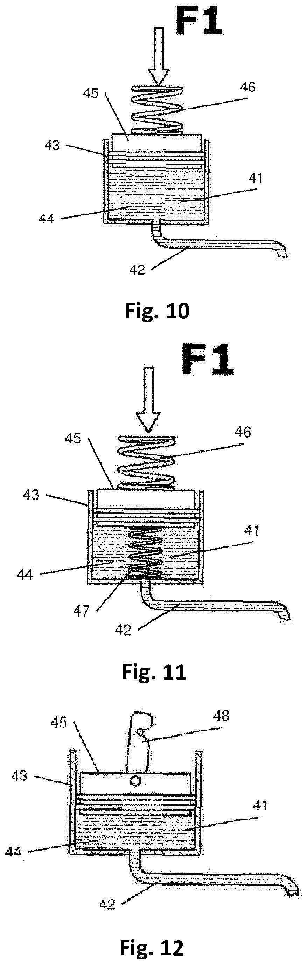

Fig. 10 zeigt in Detaildarstellung eine Variante des Zylinders 43 der stirnseitigen Begrenzungshülse 14 gemäß der zweiten Ausführungsform in gelöster Stellung. Hierbei wird die Kraft F1 des Kolbens 45 auf das Fluid 41 zumindest teilweise durch eine Druckfeder 46 ausgeübt. Auf diese Weise wird zumindest ein Teil der Kraft F1, die über das Fluid 41 auf das ringförmige Formteil 25 wirkt, von der Druckfeder 46 bewirkt, so dass lediglich der verbleibende Anteil des Druckes durch den Kolben aufgebracht werden muss.

Fig. 11 zeigt in Detaildarstellung eine weitere Variante des Zylinders 43 der stirnseitigen Begrenzungshülse 14 gemäß der zweiten Ausführungsform in gelöster Stellung. In diesem Fall wird die Kraft F1 des Kolbens 45 auf das Fluid 41 zumindest teilweise durch eine Druckfeder 46 ausgeübt während gleichzeitig eine Rückstellfeder 47, die z.B. in dem Hohlraum 44 vorgesehen sein kann, eine rückstellende Kraft entgegen der Kraft F1 ausübt. Hierdurch wird, je nach Auslegung der entsprechenden Federkräfte, jeweils ein Teil der Kräfte, die auf den Kolben 45 und damit auf das Fluid 41 wirken, von den Federn 46, 47 übernommen und der Kolben 45 entsprechend um diese Kräfte entlastet.

Fig. 12 zeigt in Detaildarstellung eine weitere Variante des Zylinders 43 der stirnseitigen Begrenzungshülse 14 gemäß der zweiten Ausführungsform in Prägestellung. In dieser Stellung ist das Fluid 41 durch den Kolben 45 aus dem Hohlraum 44 des Zylinders 43 in die Druckkammer 40 gedrückt, wodurch die Prägung der Schellennut 26 durch das ringförmige Formteil 25 erfolgen kann. Damit der entsprechende Druck nicht durch den Kolben 45 gehalten werden muss, ist in dieser Variante eine Verriegelung 48 vorgesehen, die den Kolben 45 in dieser Stellung halten kann, ohne dass hierzu Arbeit durch den Kolben 45 aufgebracht werden muss.

### Bezugszeichenliste

### (Teil der Beschreibung)

- 11: Schlauchrohling, unvulkanisiert
- 11': Schlauch, vulkanisiert
- 12: Fertigungsdorn
- 13: konischer Anfangsbereich des Fertigungsdorns 12
- 14: Begrenzungshülse
- 15: Innenstufe der Begrenzungshülse 14
- 16: Stirnschraube
- 17: radiale Begrenzungswand der Begrenzungshülse 14
- 21: Ringflansch
- 22: Dehnkammer
- 23: Dehnstoff
- 24: ringförmige Öffnung der Dehnkammer 22
- 25: elastisches ringförmiges Formteil
- 26: Nut für Schlauchschelle
- 31: Oberflächennut des Fertigungsdorns 12
- 32: Erhebungen am inneren Umfang des Schlauchendbereichs 11'
- 33: Rillen des Fertigungsdorns 12
- 34: rippenförmige Ansätze am inneren Umfang des Schlauchendbereichs 11'
- 40: Druckkammer
- 41: flüssiges Medium, Fluid
- 42: Fluidleitung, Hydraulikleitung
- 43: Zylinder
- 44: Hohlraum des Zylinders 43
- 45: Kolben des Zylinders 43
- 46: Druckfeder
- 47: Rückstellfeder
- 48: Verriegelung

## Patentansprüche

1. Verfahren zur Herstellung einer Schellennut (26) im Endbereich eines Schlauches (11, 11') aus einem elastomeren Werkstoff, z. B. Kautschuk, bei dem der Schlauchrohling (11) auf einen Fertigungsdorn (12) aufgezogen wird und stirnseitig durch eine Begrenzungseinrichtung (14) auf dem Fertigungsdorn (12) platziert ist und wobei zur Erzeugung einer Nut (26) für eine Schlauchschelle auf dem Schlauch (11') der Schlauchrohling (11) im Endbereich umlaufend eingedrückt wird,
**dadurch gekennzeichnet,**
**dass** vor der Vulkanisation der Endbereich mit geringem radialem Spaltabstand von einem dehn- und stauchbaren, ringförmigen Formteil (25) umgeben wird, das von einer radial einwirkenden Kraft umfangsmäßig beaufschlagt und in die Schlauchoberfläche eingedrückt wird und in dieser Lage während der Vulkanisation verbleibt.

2. Verfahren zur Herstellung einer Schellennut (26) nach Anspruch 1, **dadurch gekennzeichnet,**
**dass** die radiale Umfangskraft von einem umlaufenden, sich bei Temperatur ausdehnenden Werkstoff (23) ausgeübt wird, der das ringförmige Formteil (25) auf seinem Außenumfang beaufschlagt, so dass das ringförmige Formteil (25) bei Temperaturerhöhung in die Schlauchoberfläche eindringt und in dieser Lage während der Vulkanisation verbleibt.

3. Verfahren zur Herstellung einer Schellennut (26) nach Anspruch 1, **dadurch gekennzeichnet,**
**dass** die radiale Umfangskraft von einem Medium (41) ausgeübt wird, das das ringförmige Formteil (25) auf seinem Außenumfang beaufschlagt, so dass das ringförmige Formteil (25) bei Druckerhöhung in einer Druckkammer (40) in die Schlauchoberfläche eindringt und in dieser Lage während der Vulkanisation verbleibt.

4. Vorrichtung zur Durchführung des Verfahrens nach einem der Ansprüche 1 bis 3, mit einem Fertigungsdorn (12) zum Aufziehen des Schlauchrohlings (11), wobei auf den Fertigungsdorn (12) endseitig eine Begrenzungseinrichtung (14) für die Schlauchstirnseite aufsetzbar ist und wobei Mittel (23, 25, 41) zur Erzeugung einer Nut (26) für eine Schlauchschelle auf dem Schlauch (11, 11') vorgesehen sind,
**dadurch gekennzeichnet,**
**dass** die Begrenzungseinrichtung (14) eine stirnseitig mit einem radialen Anschlag (17) versehene Begrenzungshülse (14) ist, die am anderen Ende entweder eine umlaufende, mit einer Füllung aus einem sich bei Temperatur ausdehnenden Werkstoff (23) versehene Dehnkammer (22) oder eine mit einem Medium (41) versehene Druckkammer (40) aufweist, und
**dass** die Dehnkammer (22) bzw. Druckkammer (40) an ihrem Innenumfang eine umlaufende ringförmige Öffnung (24) aufweist, in der ein dehn- und stauchbares, ringförmiges Formteil (25) eingesetzt ist.

5. Vorrichtung nach Anspruch 4, **dadurch gekennzeichnet,**
**dass** das ringförmige Formteil (25) aus einem Werkstoff mit Rückstellkraft, vorzugsweise einem elastischen Werkstoff, besteht.

6. Vorrichtung nach einem der Ansprüche 4 oder 5, **dadurch gekennzeichnet,**
**dass** der Fertigungsdorn (12) eine umlaufende Oberflächennut (31) aufweist, die sich lagemäßig mit der ringförmigen Öffnung (24) deckt.

7. Vorrichtung nach einem der Ansprüche 4 oder 5, **dadurch gekennzeichnet,**
**dass** der Fertigungsdorn (12) umlaufende Rillen (33) aufweist, die sich lagemäßig mit der ringförmigen Öffnung (24) decken.

8. Vorrichtung nach einem der Ansprüche 4 bis 7, **dadurch gekennzeichnet,**
**dass** das Medium (41) mittels einer Druckfeder (46) zumindest anteilsweise in die Druckkammer (40) gedrückt werden kann.

9. Vorrichtung nach einem der Ansprüche 4 bis 8, **dadurch gekennzeichnet,**
**dass** das Medium (41) mittels einer Rückstellfeder (47) zumindest anteilsweise aus der Druckkammer (40) heraus befördert werden kann.

10. Vorrichtung nach einem der Ansprüche 4 bis 9, **dadurch gekennzeichnet,**
**dass** das Medium (41) mittels eines Kolbens (45) in die Druckkammer (41) gedrückt und aus der Druckkammer (40) heraus befördert werden kann,
wobei der Kolben (45) mittels einer Verriegelung (48) in einer Position verriegelt werden kann, in der der Kolben (45) auf das Medium (41) Druck ausübt.

## Claims

1. Method for producing a clamp groove (26) in the end region of a hose (11, 11') from an elastomeric material, for example natural rubber, in which method the tube blank (11) is mounted onto a production mandrel (12) and at the end side is placed by a delimitation installation (14) on the production mandrel (12), and wherein the hose blank (11) in the end region is indented in an encircling manner in order for a groove (26) for a hose clamp on the hose (11') to be generated,
**characterized in that**
the end region prior to vulcanization at a minor radial clearance spacing is surrounded by an expandable and compressible annular mould part (25) which is circumferentially impinged by a radially acting force and is indented into the hose surface and remains in this position during vulcanization.

2. Method for producing a clamp groove (26) according to Claim 1,
**characterized in that** the radial circumferential force is exerted by an encircling material (23) that expands under the influence of temperature and which impinges the annular mould part (25) on the external circumference thereof such that the annular mould part (25) at an elevated temperature penetrates the hose surface and remains in this position during vulcanization.

3. Method for producing a clamp groove (26) according to Claim 1,
**characterized in that** the radial circumferential force (41) is exerted by a medium which impinges the annular mould part (25) on the external circumference thereof such that the annular mould part (25) at an elevated pressure in a pressurized chamber (40) penetrates the hose surface and remains in this position during vulcanization.

4. Device for carrying out the method according to one of Claims 1 to 3, having a production mandrel (12) for mounting the hose blank (11), wherein a delimitation installation (14) for the hose end side is push-fittable onto the end side of the production mandrel (12), and wherein means (23, 25, 41) for generating a groove (26) for a hose clamp on the hose (11, 11') are provided,
**characterized in that**
the delimitation installation (14) is a delimitation sleeve (14) that at the end side is provided with a radial detent (17) and at the other end has either an encircling expansion chamber (22) that is provided with a filling of a material (23) that expands under the influence of temperature, or a pressurized chamber (40) that is provided with a medium (41),
and **in that** the expansion chamber (22) or the pressurized chamber (40), respectively, on the internal circumference thereof has an encircling annular opening (24) in which an expandable and compressible annular mould part (25) is inserted.

5. Device according to Claim 4, **characterized in that** the annular mould part (25) is composed of a material having a restoring force, preferably of an elastic material.

6. Device according to one of Claims 4 or 5, **characterized in that** the production mandrel (12) has an encircling surface groove (31) which in terms of position is congruent with the annular opening (24).

7. Device according to one of Claims 4 or 5, **characterized in that** the production mandrel (12) has encircling flutes (33) which in terms of position are congruent with the annular opening (24).

8. Device according to one of Claims 4 to 7, **characterized in that** the medium (41) can be pushed into the pressurized chamber (40) at least in a participating manner by means of a compression spring (46).

9. Device according to one of Claims 4 to 8, **characterized in that** the medium (41) can be moved out of the pressurized chamber (40) at least in a participating manner by means of a restoring spring (47).

10. Device according to one of Claims 4 to 9, **characterized in that** the medium (41) can be pushed into the pressurized chamber (41) and moved out of the pressurized chamber (40) by means of a piston (45), wherein the piston (45) by means of a locking mechanism (48) can be locked in a position in which the piston (45) exerts pressure on the medium (41).

## Revendications

1. Procédé de fabrication d'une rainure de collier (26) dans la région d'extrémité d'un tuyau (11, 11') en matériau élastomère, par exemple en caoutchouc, dans lequel l'ébauche de tuyau (11) est enfilée sur un mandrin de fabrication (12) et est placée du côté frontal sur le mandrin de fabrication (12) par un dispositif de limitation (14) et, pour générer une rainure (26) pour un collier de serrage sur le tuyau (11'), l'ébauche de tuyau (11) est enfoncée sur la périphérie dans la région d'extrémité,
**caractérisé en ce**
**qu'**avant la vulcanisation, la région d'extrémité est entourée avec une faible distance de fente radiale par une pièce moulée de forme annulaire extensible et compressible (25) qui est sollicitée sur la périphérie par une force agissant radialement et qui est enfoncée dans la surface du tuyau et qui reste dans cette position pendant la vulcanisation.

2. Procédé de fabrication d'une rainure de collier (26) selon la revendication 1, **caractérisé en ce que**
la force périphérique radiale est exercée par un matériau (23) périphérique se dilatant sous l'effet de la température, qui sollicite la pièce moulée de forme annulaire (25) sur sa périphérie extérieure de telle sorte que la pièce moulée de forme annulaire (25), lors de l'augmentation de la température, pénètre dans la surface du tuyau et reste dans cette position pendant la vulcanisation.

3. Procédé de fabrication d'une rainure de collier (26) selon la revendication 1, **caractérisé en ce que**
la force périphérique radiale est exercée par un milieu (41) qui sollicite la pièce moulée de forme annulaire (25) sur sa périphérie extérieure de telle sorte que la pièce moulée de forme annulaire (25), lors de l'augmentation de pression, pénètre dans une chambre de pression (40) dans la surface du tuyau et reste dans cette position pendant la vulcanisation.

4. Dispositif pour mettre en oeuvre le procédé selon l'une quelconque des revendications 1 à 3, comprenant un mandrin de fabrication (12) pour enfiler l'ébauche de tuyau (11), un dispositif de limitation (14) pour le côté frontal du tuyau pouvant être posé sur le mandrin de fabrication (12) du côté de l'extrémité et des moyens (23, 25, 41) pour générer une rainure (26) pour un collier de serrage étant prévus sur le tuyau (11, 11'),
**caractérisé en ce que**
le dispositif de limitation (14) est une douille de limitation (14) pourvue d'une butée radiale (17) du côté frontal, qui présente à l'autre extrémité soit une chambre de dilatation périphérique (22), pourvue d'un remplissage constitué d'un matériau (23) se dilatant sous l'effet de la température, soit une chambre de pression (40) pourvue d'un milieu (41), et
**en ce que** la chambre de dilatation (22) ou la chambre de pression (40) présente au niveau de sa périphérie intérieure une ouverture de forme annulaire périphérique (24) dans laquelle est insérée une pièce moulée de forme annulaire (25) extensible et compressible.

5. Dispositif selon la revendication 4, **caractérisé en ce que**
la pièce moulée de forme annulaire (25) se compose d'un matériau ayant une force de rappel, de préférence d'un matériau élastique.

6. Dispositif selon l'une quelconque des revendications 4 ou 5, **caractérisé en ce que** le mandrin de fabrication (12) présente une rainure de surface périphérique (31) dont la position coïncide avec l'ouverture de forme annulaire (24).

7. Dispositif selon l'une quelconque des revendications 4 ou 5, **caractérisé en ce que** le mandrin de fabrication (12) présente des rainures périphériques (33) dont la position coïncide avec l'ouverture de forme annulaire (24).

8. Dispositif selon l'une quelconque des revendications 4 à 7, **caractérisé en ce que** le milieu (41) peut être pressé au moyen d'un ressort de compression (46) au moins en partie dans la chambre de pression (40).

9. Dispositif selon l'une quelconque des revendications 4 à 8, **caractérisé en ce que** le milieu (41) peut être transporté au moyen d'un ressort de rappel (47) au moins en partie hors de la chambre de pression (40).

10. Dispositif selon l'une quelconque des revendications 4 à 9, **caractérisé en ce que**
le milieu (41) peut être pressé au moyen d'un piston (45) dans la chambre de pression (41) et peut être transporté hors de la chambre de pression (40),
le piston (45) pouvant être verrouillé au moyen d'un verrouillage (48) dans une position dans laquelle le piston (45) exerce une pression sur le milieu (41).
